# EUROPEAN PATENT SPECIFICATION

(11) **EP 1 134 826 B1**
(45) Date of publication and mention of the grant of the patent: **06.08.2008**
(21) Application number: 00420045.7
(22) Date of filing: 14.03.2000
(51) Int. Cl.: H01M 4/58, H01M 10/40, H01G 9/00, G01N 27/30, G02F 1/15, H01M 14/00

(54) **New lithium insertion electrode materials based on orthosilicate derivatives**
Neue Elektrodenmaterialen mit Lithium Interkalation auf Basis von Orthosilikatsderivaten
Nouveaux matériaux d'électrode avec insertion du lithium à base de dérivés d'orthosilicate

(43) Date of publication of application: 19.09.2001
(60) Divisional application: 05011082.4
(73) Proprietor: HYDRO-QUEBEC, Montréal Québec H2Z 1A4 (CA); CENTRE NATIONAL DE LA RECHERCHE SCIENTIFIQUE, 75016 Paris (FR); Université de Montréal, Montréal, Québec H3C 3J7 (CA)
(72) Inventor: Armand, Michel, Montreal, Quebec H3T 1N2 (CA); Michot, Christophe, Montréal (Québec) H2T 2Z9 (CA); Ravet, Nathalie, Montreal, Quebec H2L 4A5 (CA); Simoneau, Martin, St-Bruno de Montarville (Québec) (CA); Hovington, Pierre, Boucherville (Québec) (CA)
(74) Representative: Guerre, Dominique

(56) References cited:
- CA-A- 2 200 998
- US-A- 4 042 482
- US-A- 5 721 070
- US-A- 6 085 015

## Description

### FIELD OF THE INVENTION

The invention relates to new lithium insertion electrode materials based on orthosilicates derivatives, electrochemical generators and variable optical transmission devices having an electrode containing these materials.

### BACKGROUND OF THE INVENTION

Electrode materials are mainly derivatives of transition metals chalcogenides, especially oxides having a lamellar structure like LiₓCoO₂ or spinels like Li₂ₓMn₂O₄. These materials usually operate via a lithium insertion mechanism with less than one lithium and electron exchanged per transition metal in the unit formula (0 ≤ x ≤ 0.6). Besides, these materials suffer from facile loss of the transition metal which is leached into the electrolyte. Cobalt is prohibitively expensive for large scale application.

Materials with the olivine structure LiFePO₄ (triphylite) and the quasi-isomorphous delithiated material noted as "□FePO₄" where "□" represents the lithium site vacancies, have the advantage of an operating voltage of 3.5 V vs. Li⁺/ Li°, i.e. in the stability window of both liquid and polymer electrolytes with a flat discharge (lithium intercalation) plateau. The materials arc however limited by relatively both slow Li⁺ diffusion kinetics and low electronic conductivity due to the high electronegativity of the phosphate anion. The absence of non-stoichiometry or mutual miscibility for both phases (LiFePO₄ and □FePO₄) is an advantage in terms of the shape of the discharge curve but limits the kinetics of phase transformation which may lead ultimately at high current densities to fragmentation of the material and loss of contact with the carbon grains acting as current collector. The phosphate of this type offers the possibility of exchanging only one lithium per unit formula.

Conversely, it is known that the compounds with either the Li₂SO₄, Li₃PO₄, Li₄SiO₄ and their solid solutions possess relatively high diffusion coefficients for lithium ions, but have no redox activity.

### SUMMARY OF THE INVENTION

In the present invention, orthosilicates containing the SiO₄⁴⁻ tetranion as the building block are used as redox materials by incorporation of at least one transition elements with at least two valency levels. Lithium ingress or egress from the structure to compensate for the valency change of the redox couples during electrode operation and keep overall electroneutrality.

### DETAILED DESCRIPTION OF THE INVENTION

The general formula of the materials of the invention is:

LiₓMₘ- Tₜ [SiO₄]

wherein:
M represents Mn²⁺ or Fe²⁺ and mixtures thereof;
T represents a metal in the +3 oxidation state, chosen among: Al³⁺, Ti³⁺, Cr³⁺, Fe³⁺, Mn³⁺, Ga³⁺, Zn³⁺, V³⁺; all M, T, being elements residing in octahedral or tetrahedral sites.

The stoichiometric coefficient t, is positive and comprised between zero (inclusive) and 1 (inclusive). Other conditions arc: 0≤x≤2; 1 ≤ m ≤2 ; and x+2m = 4*.*

Silicon is the second most abundant element in the earth crust, and silicates structures are chemically very robust, and thus electrochemically stable. The preferred transition metals besides iron and manganese are chosen among: titanium, vanadium, chromium, manganese, iron, cobalt, nickel, copper, niobium and tantalum. The compounds containing a large fraction of iron and/or manganese are preferred due to the abundance and lack of toxicity of these elements. In addition, metals with fixed valency or redox states whose potential lies outside the domain of operation of the electrode can be substituted partially for the transition elements to improve the diffusion characteristics of the lithium ions and/or increase the number of available sites, help control grain size and allow the existence of continuous solid solution between the oxidized and reduced form of the electrode material. These elements are preferably chosen among lithium, magnesium, calcium, zinc aluminum, gallium and tin. For instance, these substitutions allows for the coexistence of iron and/or manganese in two different oxidation states in the same phase, or introduce specific interactions with other elements having redox levels close to those of Fe and Mn (eg.: Fe²⁺/Ti⁴⁺ ⇔ Fe³⁺/Ti³⁺, Mn²⁺/V⁵⁺ ⇔ Mn³⁺/V⁴⁺ etc.) both of which are favorable to electronic conductivity, while disorder on the anionic site provides preferential diffusion sites for Li⁺.

Another aspect of the invention relates to the possibility to substitute the silicon sites by various elements. The orthosilicate anion being isosteric with the sulfate, phosphate, germanate and vanadate anions, the corresponding elements can easily replace silicon in this type of structure, as does boron and aluminum, offering a wide choice of materials with complete control of the charge density on the anionic sites. Similarly, the propensity of orthosilicates structures to accommodate large fractions of either vacancies or interstitial ions is very favorable to lithium ion diffusion while maintaining the integrity of the structure during lithium intercalation-desintercalation processes.

The materials according to the invention have preferably the orthorombic structures determined by X-ray and electron diffraction for lithium phosphate (a and g forms), both the low and high temperature form, where the metal ions occupy partially either the seven unoccupied tetrahedral sites left or the "stuffed olivine" stucture with a partial occupancy of the four octahedral sites (ASTM N° 25-1020 and 15-760 ) or that of lithium orthosilicate Li₄SiO₄. Capacities well in excess of 160 mAh/g can be obtained, which are superior than for the conventional electrode materials. Another advantage of the materials of the present invention is to prevent the leaching of transition metals into the electrolyte due to the high charge of the orthosilicate anion SiO₄⁴⁻ which binds selectively the multiply charged cations, including the transition elements.

The compounds of the invention are especially useful, when used alone or in admixture with other redox-active compounds, as a component of stable electrode materials in electrochemical cells, and primary or secondary batteries in which the negative electrode is a source of lithium ions. Typical examples include, in a non limiting way, metallic lithium, lithium alloys, nanodispersions of such alloys in a lithium oxide matrix, such as those obtained by reduction of SnO or SnO₂, a lithium intercalation compound in carbon, especially graphite or carbonaceous matters resulting from the pyrolysis of organic derivatives, like petroleum coke or polyparaphenylene, lithium-titanium spinels of general formula Li_{1+y}Ti_{2-x/4}O₄ (0≤x≤1, 0≤y≤1, independently) and its solid solutions with other spinels, or a lithium-transition metal mixed nitride like Li₃₋ₓCoₓN (0 ≤ x ≤ 1, ). These materials can be used alone or in admixtures.

Other applications are in supercapacitors or as counter-electrode for controlled reflection-transmission windows ("smart windows") due to the low optical absorption of the compounds in different oxidation states.

The compounds of the present invention are easily prepared by the techniques of inorganic chemistry and ceramics known to the man skilled in the art. In general, oxides, salts or derivatives of the elements to be incorporated in the final composition of the material are mixed in a predetermined ratio and heated at a preset temperature to ensure reaction. Preferably, the metallic salts are those derived from anions that easily decompose at moderate temperatures to leave the oxides. These include the organic salts like acetates, oxalates and in general carboxylic acid derivatives, betadiketonates, alkoxides or mixtures thereof. Preferred inorganic salts similarly are chosen among hydroxides, nitrates, carbonates, sulfates. The so-called sol-gel techniques are especially appreciated as they allow to incorporate the elements in a highly dispersed form which results in homogeneous powders of controllable grain size at relatively low temperature. The silicon alkoxides are especially useful for this purpose as they hydrolyze into silica precursors at room temperature and the silica gel thus formed have a high surface area and adsorbs large quantities of metal salt leading to homogeneous materials upon heat treatment. A wide choice of silicon, titanium, germanium, aluminum derivatives alkoxides are commercially available Variations of this technique are the coprecipitation of elements form aqueous or non-aqueous media and the Pechini process where polyester-polyacid is formed in solution and chelates the ion from solution this step being followed by drying and pyrolysis. The control of the oxidation level of the elements, especially transition elements can be achieved by working in a controlled environment. Low partial pressures of oxygen can be maintained with vacuum, an inert gas or reducing mixtures like hydrogen or carbon monoxide/carbon dioxide mixture. Well defined oxygen activities can thus be obtained from known thermodynamical data. Conversely, air or oxygen bring the transition element to high valence states.

The redox state of the material can also be controlled by chemical extraction or insertion of lithium from the structure, thus mimicking the electrode operation. In a non limiting way, known oxidants able to extract lithium can be chosen among bromine, chlorine, iodine, the nitrosonium or nitronium salts of stable anions like NO⁺ BF₄⁻ or NO₂⁺PF₆⁻. Reducing agents, in a non limiting way can be similarly chosen among: the iodide ion, LiBH₄, the radical-anion derivatives of lithium with condensed aromatic molecules (naphtalene, anthracene, benzophenone), organometallic reagents like butyl lithium, lithium thiolates. The desired degree of lithium content of the compounds of the invention can also be obtained electrochemically.

The following examples are provided to illustrate the present invention and shall by no means by construed as limited its scope.

### EXAMPLES

### Example 1

To 90 ml of water and 10 ml of methanol are added 20.4 g of lithium acetate dihydrate Li(C₂H₃O₂)•2(H₂O), 24,5 g of manganese acetate tetrahydrate (Mn(C₂H₃O₂)₂•4(H₂O)) and 14.8 ml of tetramethoxysilane. The mixture is milled with zirconia pellets in a heavy walled plastic container on a roller mill for 60 hours. The thick slurry is poured onto a PTFE evaporating dish and dried at 90°C in an oven with air circulation. The resulting mass is powdered in a mortar and the organic residues are removed by heat treatment at 350°C in air. The resulting brownish-green powder is transferred to an alumina boat and the compound is treated at 800°C in a electrically heated furnace under a reducing gas stream containing 8% hydrogen diluted in argon. 13 g of Li₂MnSiO₄ are obtained (81% yield).

### Example 2

71.8 g of ferrous oxide FeO and 89.9 of lithium metasilicate Li₂SiO₃ are ball-milled with high carbon steel ball for 4 hours. The resulting mixture is transferred into a quartz ampoule in which some iron turnings are added. The ampoule is evacuated under secondary vacuum while kept at 200°C and sealed, The reaction

FeO + Li₂SiO₃ ⇒ Li₂FeSiO₄

is complete at 800°C in 4 hours. After cooling, the ampoule is opened under argon and the iron turnings are removed magnetically.

### Example 3

Iron protoxide FeO (71.8 g) and lithium metasilicate Li₂SiO₃ (90 g) are ball-milled with high carbon steel ball for 4 hours. The resulting mixture is transferred into a quartz ampoule in which some iron turnings are added. The ampoule is evacuated under secondary vacuum while kept at 200°C and sealed. The reaction

FeO + Li₂SiO₃⇒ Li₂FeSiO₄

is complete at 800°C in 4 hours.

### Example 4

21 6 g of iron oxalate dihydrate, 1.79 g manganese oxalate dihydrate and 5.17 g of lithium carbonate are milled similarly as in example 1 with 13.4 g of polydiethoxysiloxane (Gelest Inc, Tullytouwn PA, USA catalog N° PSI-023) in 100 ml of 96 % ethyl alcohol. The resulting slurry is evaporated and calcined at 500°C under air. The cake is pulverized in a ball mill for 20 minutes and the resulting powder is treated at 1050°C for 10 hours in an tubular furnace under an equivolumic mixture of CO₂ and CO. The resulting compound has the formula Li_{1.4}Fe_{1.2}Mn_{0.1}O₄.

### Example 5

To 50 ml of methanol are added 19.4 g of lithium acetate dihydrate Li(C₂H₃O₂) • 2(H₂O), 19.6 g of manganese acetate tetrahydrate Mn(C₂H₃O₂)₂•4(H₂O), 14.8 ml of tetramethoxysilane and 2.75 ml of titanium tetraisopropoxide diluted in 20 ml of isopropanol. The mixture is milled with zirconia pellets in a heavy walled plastic container on a roller mill for 60 hours. The slurry is poured onto a PTFE evaporating dish and dried at 80°C in a air circulation oven. The resulting mass is powdered in a mortar and the organic residues are removed by heat treatment at 350°C in air. The resulting powder is transferred to an alumina boat and the compound is treated as in example 1 at 800°C under a reducing gas stream containing 8 % hydrogen diluted in argon. The compound obtained corresponds to the formula Li_{1.9}Mn_{0.8} Ti_{0.1}SiO₄ where Ti is in the +3 state and manganese is divalent,

### Example 6

3 g of the compound of example 2, Li₂FeSiO₄ are suspended in 20 ml of acetonitrile and treated with 1.7 g of bromine under stirring at room temperature. After two hours, the suspension is filtered and washed with acetonitrile leaving a solid having the composition Li₁FeSiO₄, This corresponds to an electrode capacity of 172 mAh/g. Similarly, 7 g of the material of example 4 are treated with 3 g of bromine in 50 ml of acetonitrile. After filtration, the material Li_{0.1}Fe_{1.2}Mn_{0.1}O₄ is obtained. It corresponds to an electrode capacity of 260 mAh/g.

### Example 7

5 g of the compound of example 1, Li₂MnSiO₄ are suspended in 40 ml of nitromethane and treated with 12 g nitronium hexafluorophosphate NO₂PF₆ under stirring at room temperature. After two hours, the suspension is filtered and washed with nitromethane leaving a brownish-purple solid having the composition MnSiO₄. This corresponds to an electrode capacity of 345 mAh/g

### Example 8

8 g of the compound of example 1, Li₂MnSiO₄ and 3.36 g of lithium iron phosphate LiFePO₄ are ball-milled with steel balls under an inert atmosphere until the grain size does not exceed 4 microns. The mixture is introduced in a closed-end nickel tube which is evacuated and welded. The tube is treated at 750°C for 10 hours and allowed to cool to room temperature. The solid solution obtained has the formula Li_{1.7}Mn_{0.7} Fe₀.₃Si₀.₇P₀.₃O₄.

### Example 9

A solid-state battery using a 10 mm lithium anode laminated on a 10 mm nickel foil, a 25 mm polymer electrolyte and a 45 mm positive electrode is constructed with a total active surface of 4 cm². The electrolyte is a crosslinked condensation polymer prepared according to J. Electrochem. Soc. 141-7, 1915 (1994) and Journal of Power Sources, 54-1, 40 (1995) with lithium trifluoromethane sulfonimide Li(CF₃SO₂)₂N as a solute corresponding to a 16:1 ratio of oxygens from polymer ether groups to Li⁺. The positive electrode is obtained from a slurry of 53% by volume of PEO, molecular weight 200 000, 40 % by volume of the material of example 4 and delithiated according to example 6, and 7% by volume of Ketjenblack® in acetonitrile, by coating technique on a 12 mm aluminium foil. 1.2 lithium per formula unit can be cycled between 3.5 and 2.4 volts.

### Example 10

A gel type rocking-chair ("lithium ion") battery is constructed using a 40 mm anode made from graphite flakes (4 mm) with an ethylene-propylene-diene binder (5%) by volume, and laminated on a 10 mm copper foil, a 45 mm electrolyte containing a vinylidene fluoride-hexafluoropropylene copolymer (Solvay, Belgium), 30 ww%, fumed silica (5 ww%) with gelled with a liquid elecrolyte consisting of 1.2 molar lithium hexafluorophate in equivolumic ethylene carbonate-ethylmethyl carbonate (65 ww%) mixed solvent The positive electrode consists in a blend of the electode material of example 5 (80 ww%), Ketjenblack® (8 ww%) and the vinylidene fluoride-hexafluoropropylene copolymer used in the electrolyte (12 ww%). The battery is housed in a flat metal-plastic laminate container allowing for the passage of current leads. At 25°C, the battery operation allows the exchange of 1.3 lithium per manganese in the positive electrode in the voltage range 2 - 4.3 volts.

While the invention has been described in connection with specific embodiments thereof, it will be understood that it is capable of further modifications and this application is intended to cover any variations, uses or adaptations of the invention following, in general, the principles of the invention and including such departures from the present description as come within known or customary practice within the art to which the invention pertains, and as may be applied to the essential features hereinbefore set forth, and as follows in the scope of the appended claims.

## Claims

1. Lithium insertion-type electrode materials based on orthosilicate structure, having general formula:
LiₓMₘ- Tₜ [SiO₄]
wherein
M represents Mn²⁺ or Fe²⁺ and mixtures thereof;
T represents a metal in the +3 oxidation state comprising Al³⁺, Ti³⁺, Cr³⁺, Fe³⁻, Mn³⁺, Ga³⁺, Zn³⁺ , V³⁺;
M, T, being elements residing in octahedral or tetrahedral sites;
the stoichiometric coefficient t, is positive and comprised between zero (inclusive) and 1 (inclusive); 0 ≤ x ≤ 2; 1 ≤ m≤ 2 ; and
x + 2 m=4.

2. Electrode material according to claim 1 which has a crystal structure related to that of lithium phosphate or lithium orthosilicate.

3. Electrode material according to claims 1 and 2 **characterized in that** more than one lithium ion can be extracted or inserted per unit formula (SiO₄).

4. Electrical generator having a least one positive and one negative electrode **characterized in that** at least one positive electrode contains a material according to claim 1 and 2 and at least one negative electrode is a source of lithium ion.

5. Electrical generator according to claim 4 **characterized in that** the negative electrode is metallic lithium, a lithium alloy, possibly as a nanodispersion in lithium oxide, a lithium intercalation compound carbon or carbonaceous matters resulting from the pyrolysis of organic derivatives, a lithium-titanium spinel Li_{1+y}Ti₂₋ₓ/₄O₄ wherein 0 ≤ x and 0 ≤ y ≤ 1) and its solid solutions with other spinels, or a lithium-transition metal mixed nitride and mixtures thereof.

6. Electrical generator according to claim 4 **characterized in that** a conductive additive is present in the positive electrode.

7. Electrical generator according to claim 5 **characterized in that** the conductive additive in the positive electrode material is carbon.

8. Electrical generator according to claim 4 **characterized in that** the positive electrode comprises a material of formula Li_{λ}Fe_{f}MnₘSiₛO₄ wherein f + m ≤ 1.2; s= 1; 8-4s-2m-2f ≥ λ ≥ 8-4s-4m-3f.

9. Electrical generator according to claim 4 **characterized in that** the positive electrode contains in addition to the materials of claim 1 another intercalation material.

10. Electrical generator according to claim 9 **characterized in that** the intercalation material is a lamellar dichalcognenide.

11. Electrical generator according to claims 4 to 7 **characterized in that** the positive electrode contains a polymeric binder.

12. Electrical generator according to claims 4 and 11 **characterized in that** the polymeric binder is an homopolymer or copolymer of tetrafluoroethylene or an ethylene-propylene-diene terpolymer.

13. Electrical generator according to claim 12 **characterized in that** the positive electrode contains an aprotic solvent and a salt, the cation of which is at least in part Li.

14. Electrical generator according to claim 4 and 11 **characterized in that** the polymeric binder possesses ionic conductivity.

15. Electrical generator according to claim 13 **characterized in that** the polymeric binder is a polyether crosslinked or not and dissolving a salt, the cation of which is at least in part Li⁺.

16. Electrical generator according to claim 11 **characterized in that** the polymeric binder is swollen by an aprotic solvent and contains a salt, the cation of which is at least in part Li⁺.

17. Electrical generator according to claim 11 **characterized in that** the polymeric binder is a polyether, a polyester, a methylmethacrylate-based polymer, an acrylonitrile-based polymer, a vinylidene fluoride-based polymer.

18. Electrical generator according to claims 13 and 16 **characterized in that** the aprotic solvent is ethylene carbonate, propylene carbonate, dimethylcarbonate, diethylcarbonate, methyl-ethylcarbonate, γ-butyrolactone, a tetraalkylsufamide, a dialkyether of a mono-, di-, tri-, tetra- or higher oligo- ethylene glycols of molecular weight lower or equal to 2000, and mixtures thereof.

19. Electrical generator of the supercapacitor type **characterized in that** at least one of the electrode comprises a material according to claims 1 and 2.

20. Variable optical transmission device constructed from transparent semi-conductor coated glass or plastic and two electrodes separated by a solid or gel electrolytes, **characterized in that** at least one of the electrode contain a material according to claim 1.

21. Variable optical transmission device according to claim 20 **characterized in that** at least one of the electrode is obtained by laying a thin film of material according to claim 1 on a transparent semi-conductor coated glass or plastic by a vacuum deposition technique, sputtering, or from a sol-gel precursor.

## Patentansprüche

1. Lithium einschubartiges Elektrodenmaterial basierend auf einer Orthosilicatstruktur, der allgemeinen Formel:
Li_{λ}Mₘ[SiO₄],
wobei
M Mn²⁺ oder Fe²⁺ sowie Mischungen davon darstellt;
T ein Metall in der +3 Oxidationsstufe, umfassend Al³⁺, Ti³⁺, Cr³⁺, Fe³⁺, Mn³⁺, Ga³⁺, Zn³⁺, V³⁺ darstellt;
die Elemente sind, die an oktaedrischen oder tetraedischen Stellen anwesend sind;
der stöchiometrische Koeffizient positiv ist und zwischen Null (inklusive) und 1 (inklusive) enthalten ist;
0 ≤ x≤ 2; 1≤ m ≤ 2; und
x + 2 m.

2. Elektrodenmaterial nach Anspruch 1, mit einer Kristallstruktur, die der von Lithiumphosphat oder Lithiumorthosilicat zugehörig ist.

3. Elektrodenmaterial nach Anspruch 1 und 2, **dadurch gekennzeichnet, dass** mehr als ein Lithiumion pro Einheitsformel (SiO₄) extrahiert oder eingeschoben werden kann.

4. Elektrischer Generator mit wenigstens einer positiven und einer negativen Elektrode, **dadurch gekennzeichnet, dass** wenigstens eine positive Elektrode ein Material gemäß Anspruch 1 und 2 enthält, und dass wenigstens eine negative Elektrode eine Quelle eines Lithiumions ist.

5. Elektrischer Generator nach Anspruch 4, **dadurch gekennzeichnet, dass** die negative Elektrode Metalllithium, eine Lithiumlegierung, gegebenenfalls eine Nanodispergierung in Lithiumoxid, eine Einschiebungs-Kohlenstoffverbindung oder ein kohlehaltiger Stoff, der aus der Pyrolyse von organischen Derivaten entsteht, ein Lithium-Titan-Spinell Li_{1+y}Ti₂₋ₓ/₄O₄ ist, wobei 0 ≤ x und 0 ≤ y ≤ 1) und deren Feststofflösungen mit anderen Spinells oder ein Lithium-Übergangsmetall gemischtes Nitrid und Mischungen davon ist.

6. Elektrischer Generator nach Anspruch 4, **dadurch gekennzeichnet, dass** ein leitfähiger Zusatzstoff in der positiven Elektrode vorhanden ist.

7. Elektrischer Generator nach Anspruch 5, **dadurch gekennzeichnet, dass** der leitfähige Zusatzstoff in der positiven Elektrode Kohlenstoff ist.

8. Elektrischer Generator nach Anspruch 4, **dadurch gekennzeichnet, dass** die positive Elektrode ein Material der Formel LI_{λ}Fe₁MnₘSiₛO₄ umfasst, wobei f + m ≤ 1,2 ist; -4s-2m-2f ≥ λ≥ 8-4s-4m-3f.

9. Elektrischer Generator nach Anspruch 4, **dadurch gekennzeichnet, dass** die positive Elektrode zusätzlich zu den in Anspruch 1 genannten Materialien ein weiteres Einschubmaterial enthält.

10. Elektrischer Generator nach Anspruch 9, **dadurch gekennzeichnet, dass** das Einschubmaterial ein schichtförmiges Dichalkogenid ist.

11. Elektrischer Generator nach Anspruch 4 bis 7, **dadurch gekennzeichnet, dass** die positive Elektrode ein Polymerbindemittel enthält.

12. Elektrischer Generator nach Anspruch 4 und 11, **dadurch gekennzeichnet, dass** das Polymerbindemittel ein Homopolymer oder Copolymer von Tetrafluorethylen oder ein Ethylenpropylen-Dienterpolymer ist.

13. Elektrischer Generator nach Anspruch 12, **dadurch gekennzeichnet, dass** die positive Elektrode ein aprotisches Lösungsmittel und ein Salt ist, dessen Kation wenigstens teilweise Li⁺ ist.

14. Elektrischer Generator nach Anspruch 4 und 11, **dadurch gekennzeichnet, dass** das Polymerbindemittel eine ionische Leitfähigkeit besitzt.

15. Elektrischer Generator nach Anspruch 13, **dadurch gekennzeichnet, dass** das Polymerbindemittel ein quervernetztes oder nicht quervernetztes Polyether und in Salz löslich ist, dessen Kation wenigstens teilweise Li⁺ ist.

16. Elektrischer Generator nach Anspruch 11, **dadurch gekennzeichnet, dass** das Polymerbindemittel durch ein aprotisches Lösungsmittel gequollen ist und Salz enthält, dessen Kation wenigstens teilweise Li⁺ ist.

17. Elektrischer Generator nach Anspruch 11, **dadurch gekennzeichnet, dass** das Polymerbindemittel ein Polyether, ein Polyester, ein Polymer auf Methylmethacrylat-Basis, ein Polymer auf Acrylnitril-Basis, ein Polymer auf Vinylidenfluorid-Basis ist.

18. Elektrischer Generator nach Anspruch 13 und 16, **dadurch gekennzeichnet, dass** das aprotische Bindemittel Ethylenkarbonat, Propylenkarbonat, Dimethylkarbonat, Diethylkarbonat, Methylethylkarbonat, γ-Butyrolacton, ein Tetraalkylsufamid, Dialkyether eines Mono-, Di-, Tri-, Tetra- oder höherem Oligoethylenglykols mit einem Molekulargewicht von weniger als oder gleichwertig 2000 ist sowie Mischungen davon.

19. Elektrischer Generator der Superkondensator-Art, **dadurch gekennzeichnet, dass** wenigstens eine der Elektroden ein Material nach Anspruch 1 und 2 umfasst.

20. Variable optische Getriebevorrichtung, ausgebildet aus transparentem Halbleiter-beschichtetem Glas oder Kunststoff sowie zwei Elektroden, die durch Feststoff- oder Gelelektrolyten getrennt sind, **dadurch gekennzeichnet, dass** wenigstens eine der Elektroden ein Material nach Anspruch 1 enthält.

21. Variable optische Getriebevorrichtung nach Anspruch 20, **dadurch gekennzeichnet, dass** wenigstens eine der Elektroden dadurch erhalten wird, dass eine dünne Materialfolie nach Anspruch 1 auf ein transparentes Halbleiterbeschichtetes Glas oder einen transparenten Halbleiter-beschichteten Kunststoff durch ein Vakuumablagerungsverfahren, Bedampfung oder aus einem Sol-Gel-Vorläufer aufgelegt wird.

## Revendications

1. Matériaux d'électrode de type à insertion de lithium basé sur une structure d'orthosilicate, ayant la formule générale :
LiₓMm-Ti[SiO₄]
dans laquelle
M représente Mn²⁺ ou Fe²⁺ et des mélanges de ceux-ci ;
T représente un métal dans l'état d'oxydation +3 comprenant Al³⁺, Ti³⁺, Cr³⁺, Fe³⁺, Mn³⁺, Ga³⁺, Zn³⁺ , V³⁺ ;
M, T, étant des éléments situés dans des sites octaédriques ou tétraédriques ;
le coefficient stoechiométrique t est positif et compris entre zéro (inclus) et 1 (inclus) ;
0≤x≤2;1≤m≤2; et
x+2m=4.

2. Matériau d'électrode selon la revendication 1, qui a une structure cristalline liée à celle du phosphate de lithium ou de l'orthosilicate de lithium.

3. Matériau d'électrode selon les revendications 1 et 2, **caractérisé en ce que** plus d'un ion lithium peut être extrait ou inséré par formule unitaire (SiO₄).

4. Générateur électrique ayant au moins une électrode positive et une électrode négative **caractérisé en ce qu'**au moins une électrode positive contient un matériau selon la revendication 1 et 2 et au moins une électrode négative est une source d'ion lithium.

5. Générateur électrique selon la revendication 4, **caractérisé en ce que** l'électrode négative est du lithium métallique, un alliage de lithium, éventuellement en tant que nanodispersion dans de l'oxyde de lithium, un composé d'intercalation de lithium carbone ou matières carbonées résultant de la pyrolyse de dérivés organiques, un spinelle de lithium titane Li_{1+Y} Ti₂₋ₓ/₄O₄ où 0 ≤ et 0 ≤ y ≤ 1) et ses solutions solides avec d'autres spinelles, ou un nitrure mélangé avec un métal de transition de lithium et des mélanges de ceux-ci.

6. Générateur électrique selon la revendication 4, **caractérisé en ce qu'**un additif conducteur est présent dans l'électrode positive.

7. Générateur électrique selon la revendication 5, **caractérisé en ce que** l'additif conducteur dans le matériau d'électrode positive est du carbone.

8. Générateur électrique selon la revendication 4, **caractérisé en ce que** l'électrode positive comprend un matériau de formule Li_{λ}Fe_{f}MnₘSiₛO₄ où f + m ≤ 1,2 ; s = 1 ; 8-4s-2m-2f≥ λ ≥ 8-4s-4m-3f.

9. Générateur électrique selon la revendication 4, **caractérisé en ce que** l'électrode positive contient en plus des matériaux de la revendication 1, un autre matériau d'intercalation.

10. Générateur électrique selon la revendication 9, **caractérisé en ce que** le matériau d'intercalation est un dichalcogénure lamellaire.

11. Générateur électrique selon les revendications 4 à 7, **caractérisé en ce que** l'électrode positive contient un liant polymère.

12. Générateur électrique selon les revendications 4 et 11, **caractérisé en ce que** le liant polymère est un homopolymère ou copolymère de tétrafluoroéthylène ou un terpolymère d'éthylène-propylène-diène.

13. Générateur électrique selon la revendication 12, **caractérisé en ce que** l'électrode positive contient un solvant aprotique et un sel, dont le cation est au moins en partie Li⁺.

14. Générateur électrique selon les revendications 4 et 11, **caractérisé en ce que** le liant polymère possède une conductivité ionique.

15. Générateur électrique selon la revendication 13, **caractérisé en ce que** le liant polymère est un poly(éther) réticulé ou non et dissolvant un sel, dont le cation est au moins en partie Li⁺.

16. Générateur électrique selon la revendication 11, **caractérisé en ce que** le liant polymère est gonflé par un solvant aprotique et contient un sel, dont le cation est au en partie Li⁺.

17. Générateur électrique selon la revendication 11, **caractérisé en ce que** le liant polymère est un poly(éther), un poly(ester), un polymère à base de méthacrylate de méthyle, un polymère à base d'acrylonitrile, un polymère à base de fluorure de vinylidène.

18. Générateur électrique selon les revendications 13 et 16, **caractérisé en ce que** le solvant aprotique est du carbonate d'éthylène, du carbonate de propylène, du carbonate de diméthyle, du carbonate de diéthyle, du carbonate de méthyl-éthyle, de la γ-butyrolactone, un tétraalkylsulfamide, un dialkyléther d'un mono-, di-, tri- tétra- ou plus oligo-éthylène glycol de masse moléculaire inférieure ou égale à 2 000, et des mélanges de ceux-ci.

19. Générateur électrique du type supercondensateur **caractérisé en ce qu'**au moins l'une des électrodes comprend un matériau selon les revendications 1 et 2.

20. Dispositif de transmission optique variable construit à partir de verre ou de plastique revêtu de semi-conducteur transparent et de deux électrodes séparées par un électrolyte solide ou en gel, **caractérisé en ce qu'**au moins l'une des électrodes contient un matériau selon la revendication 1.

21. Dispositif de transmission optique variable selon la revendication 20, **caractérisé en ce qu'**au moins l'une des électrodes est obtenue en déposant un film mince de matériau selon la revendication 1 sur un verre ou une matière plastique revêtu de semi-conducteur transparent par une technique de dépôt par évaporation sous vide, pulvérisation, ou à partir d'un précurseur sol-gel.
